# EUROPÄISCHE PATENTSCHRIFT

(11) **EP 0 613 552 B1**
(45) Veröffentlichungstag und Bekanntmachung des Hinweises auf die Patenterteilung: **03.06.1998**
(21) Anmeldenummer: 93919006.2
(22) Anmeldetag: 15.09.1993
(51) Int. Cl.: G01L 19/00, G01L 19/06

(54) **PROZESSANSCHLUSSFLANSCH FÜR DRUCKMESSAUFNEHMER**
PROCESS CONNECTING FLANGE FOR PRESSURE TRANSDUCERS
BRIDE DE RACCORDEMENT A UN PROCESSUS DE TRAITEMENT POUR TRANSDUCTEURS DE PRESSION

(30) Priorität: 23.09.1992 DE 4231823; 23.09.1992 DE 9212768 U
(43) Veröffentlichungstag der Anmeldung: 07.09.1994
(73) Patentinhaber: Endress u. Hauser GmbH u.Co., D-79689 Maulburg (DE)
(72) Erfinder: GLIENKE, Horst, D-79541 Lörrach (DE); MAIER, Winfried, D-79689 Maulburg (DE)
(86) Internationale Anmeldenummer: DE9300870
(87) Internationale Veröffentlichungsnummer: WO9407120

(56) Entgegenhaltungen:
- WO-A-81/03678
- NTIS TECH NOTES November 1987 , SPRINGFIELD, VA US Seite 1144 MARSHALL SPACE FLIGHT CENTER , ALABAMA 'high-pressure transducer package'

## Beschreibung

Die Erfindung bezieht sich auf einen Prozeßanschlußflansch für Druckmeßaufnehmer mit einer lösbaren Verbindung, mit welcher der Prozeßanschlußflansch mit dem Druckmeßaufnehmer formschlüssig verbunden ist und mit Anschlußmitteln über welche der Druckmeßaufnehmer mit dem Meßmedium, dessen Druck gemessen werden soll, in räumlicher Verbindung steht.

Solche in räumlicher und formschlüssiger Verbindung mit dem Prozeßanschlußflansch stehende Druckmeßaufnehmer dienen dazu, den Differenz-, Über- und Unterdruck; Durchfluß von Gasen, Dämpfen und Flüssigkeiten; sowie hydrostatisch den Füllstand eines Behälters zu messen.

Nach dem allgemein bekannten Stand der Technik, wie er z. B. in dem Prospekt
"Meßumformer für Differenzdruck, Deltabar PMD 130", Januar 1991, insbesondere Seite 6, Zeichnung "Aufbau des Meßumformers"
der Anmelderin dargestellt ist, bestehen solche Meßumformer aus der eigentlichen keramischen Meßzelle, welche im Innenraum des Meßzellengehäuses angeordnet ist, dem ringförmigen Meßzellengehäuse, sowie den zwei gleichförmigen spiegelbildlich zueinander angeordneten Prozeßanschlußflanschen, welche die Meßzelle mit dem Meßzellengehäuse mittels lösbarer Schraubverbindungen formschlüssig und abdichtend zwischen sich einspannen. Die Meßzelle steht über elektrische Verbindungsleitungen mit einer elektronischen Schaltung in Verbindung. Die elektronische Schaltung ist von einem Gehäuse umschlossen. Das Elektronikgehäuse weist außerdem Anschlußmittel zum elektrischen Verbinden des Meßwertaufnehmers mit einer Energieversorgungs- und/oder Informationsverarbeitungszentrale auf. Das Elektronikgehäuse kann aber auch mit einem Anzeigegerät zur direkten Anzeige des Druckes ausgestattet sein.

Um nun die Meßzelle mit dem Meßmedium in räumliche Verbindung zu bringen, durchdringen Bohrungen die beiden prozeßanschlußflansche. An die Bohrungen sind jene Leitungen anschließbar, über die der Meßraum und damit das Meßmedium mit dem Druckmeßaufnehmer in räumlicher Verbindung steht.

Sehr häufig besteht die Meßaufgabe des Meßwertaufnehmers in der Druckmessung von aggressiven oder korrosiven Medien, sowohl gasförmiger als auch in fluidischer Form. Für solche Aufgaben ist es notwendig und üblich, die Prozeßanschlußflansche aus einem Werkstoff herzustellen, welcher resistent gegen die Aggressivität oder Korrosivität der Meßmedien ist. Aber auch die ringförmigen Dichtungen, welche zwischen keramischer Meßzelle und den Prozeßanschlußflanschen bzw. zwischen den Meßzellengehäuse und den Prozeßanschlußflanschen eingespannt sind, müssen aus einem Werkstoff bestehen, welcher ebenfalls resistent gegenüber den Meßmedien ist. Prozeßanschlußflansche aus hochlegierten, nicht rostenden Stählen, z. B. X 6 CrNiMoTi 17122 1.4571 oder hochkorrosionsbeständige Ni, Co, Cr, Mo, Fe - Legierungen sind besonders geeignet hierzu.

Bei der Anwendung von Druckmeßgeräten unter besonders schwierigen Bedingungen jedoch z. B. in einer Chemieanlage, besteht die Notwendigkeit, solche Medien messen zu müssen, deren Aggressivität und/oder Korrosivität weit über der Beständigkeit der üblicherweise verwendeten Flanschwerkstoffe liegt. Dies können z. B. Kupfer- oder Natriumchloride, Mischungen von Salz- und Salpetersäuren, oder Schwefelsäuren im erhitzten Zustand sein. Um zu Verhindern, daß der Aggressivität oder Korrosivität nichtbeständige Werkstoff mit dem Meßmedien in Verbindung tritt, wurde bereits vorgeschlagen, Prozeßanschlußflansche statt aus einem metallischen Werkstoff aus einem polymeren Kunststoff, welcher widerstandsfähig gegenüber den meisten Säuren oder Basen ist, herzustellen.

Die mit dem Prozeßablauf in solchen Chemieanlagen verbundene hohe Erhitzung des Meßmediums bringt aber den Nachteil, daß solche Kunststoffflansche zwar resistent gegenüber den Meßmedien sind, jedoch infolge der hohen Temperatur ihre Stabilität aufgeben, was zu Undichtigkeiten und damit gefährlichem Austreten von Meßmedien an den formschlüssigen Verbindungen zwischen den Prozeßanschlußflanschen und dem Meßzellengehäuse führen kann.

In der WO 81/03678 ist ein Prozeßanschlußflansch für einen Druckmeßaufnehmer mit einer eine Meßmembran aufweisenden metallischen Meßzelle beschrieben. mit einer lösbaren Verbindung, durch welche ein metallische Prozeßanschlußflansch formschlüssig mit dem Druckmeßaufnehmer verbunden ist. mit einem nichtmetallischen Prozeßanschlußzapfen, der den Prozeßanschlußflansch durchdringt, und der sich axial an einer Schulter und radial an einer Mantelfläche abstützt. Der Prozeßanschlußzapfen weist Anschlußmittel auf. über welche der Druckmeßaufnehmer mit den Meßmedien, dessen Druck gemessen werden soll, in räumlicher Verbindung steht. Durch die Anschlußmittel stehen die eingeleiteten Meßmedien nicht nur mit der metallische Membran, sonder darüber hinaus auch mit einer Oberfläche eines Meßkörpers, der einen vor der Membran in der Meßzelle angeordneten Hohlraum begrenzt in Verbindung.

Aus der US-PS 4,617,607 ist ein kapazitiver Hochdruckmesser bekannt. Dieser Sensor weist eine oxydkeramische Messzelle und ein metallisches Gehäuse sowie ein metallisches Anchlußelement aus einem schweißbaren nichtmeßmedienbeständigen Stahl auf. An dem Anschlußelement ist der Meßmembran gegenüberliegend eine kreiszylindrische Öffnung angeformt, welche über eine Bohrung mit den Meßmedien in Verbindung steht. Eine kreisringförmige Platte aus einem rost- und säurebeständigen Stahl schließt die kreiszylindrische Öffnung gegenüber der oxydkeramischen Membran ab. Die kreiszylindrische Öffnung bewirkt, daß die Membran vollständig gleichmäßig von dem zu messenden Druck beaufschlagt wird. Der Nachteil dieses Gegenstandes liegt darin, daß verschiedene metallische Teile direkt der Aggressivität der aggressiven Meßmedien ausgesetzt sind.

Demgegenüber stellt sich die Erfindung die Aufgabe, einen Prozeßanschlußflansch vorzuschlagen, welcher gewährleistet, daß außer dem meßmedienbeständigen Werkstoff der Druckmeßzelle nur Teile aus einem dem aggressiven und/oder korrosiven Meßmedien widerstandsfähigen Kunststoff mit diesen Medien in Verbindung treten kann und dabei, trotzt der auftretenden hohen Temperaturen, eine die Druckdichtheit des Druckmeßaufnehmers gewährleistete Formstabilität der Kunststoffteile bei gleichzeitigem Verschließen des Innenraumes des Meßzellengehäuses gegenüber den Meßmedien und des Meßzellengehäuses gegenüber der Umwelt gegeben ist.

Gelöst wird diese Aufgabe durch die in dem Patentanspruch 1 gekennzeichneten Merkmale. Weitere Merkmale der Erfindung sind in den Unteransprüchen gekennzeichnet.

Die Erfindung soll anhand der Zeichnungen weiter beschrieben werden.

Es zeigen:
- Fig. 1: einen Druckmeßaufnehmer, bei welchem der erfindungsgemäße Prozeßanschlußflansch zur Anwendung kommt.
- Fig. 2: einen Schnitt durch den Prozeßanschlußflansch.
- Fig. 3: einen Schnitt durch den Prozeßanschlußzapfen.

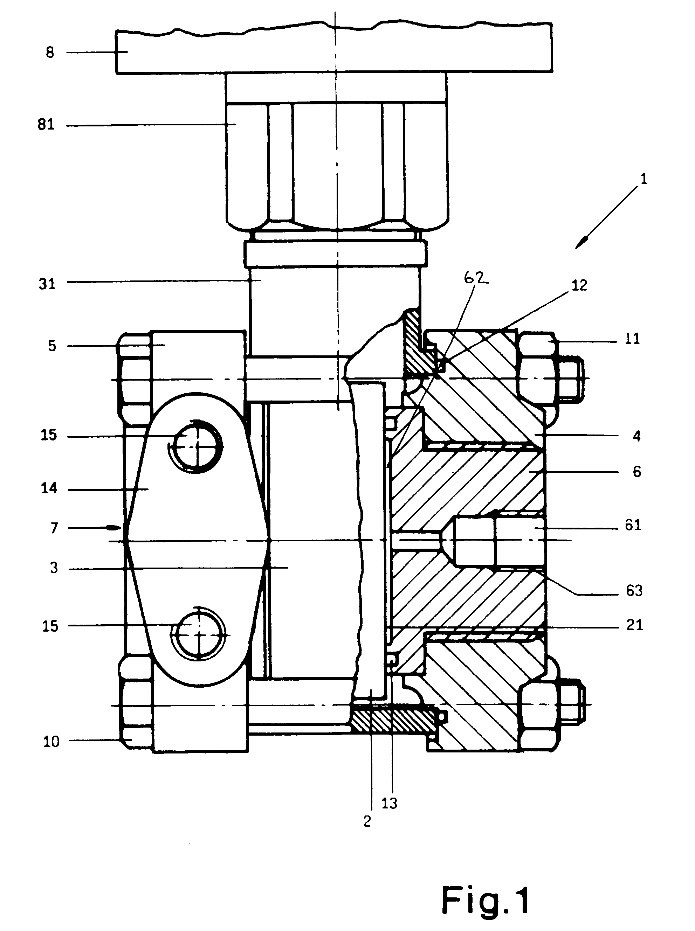

In Fig. 1 ist mit 1 ein Druckaufnehmer dargestellt, der, obwohl die Anwendung nicht darauf beschränkt ist, beispielsweise ein Differenzdruckaufnehmer sein soll. Zum messen des Differenzdruckes ist es notwendig, die Druckmeßzelle mit beiden Drücken zu beaufschlagen, deshalb besitzt der Differenzdruckaufnehmer zwei gegenüberliegende Prozeßanschlußflansche, die beide spiegelbildlich aufgebaut und angeordnet sind. Der besseren Erklärung wegen, ist nachfolgend jedoch nur eine Seite des Differenzdruckaufnehmers 1 betrachtet.

Der Druckmeßaufnehmer 1 setzt sich aus der keramischen Meßzelle 2, dem die Meßzelle 2 umschließenden Meßzellengehäuse 3, den Prozeßanschlußflanschen 4 und 5, dem Prozeßanschlußzapfen 6, 7, sowie dem Elektronikgehäuse 8 zusammen. Mittels einer lösbaren Schrauben-Muttern-Verbindung 10, 11 sind die Prozeßanschlußflansche 4, 5 so gegeneinander gespannt, daß sie eine Lage einnehmen, in welcher sie das Meßzellengehäuse 3 zwischen sich einspannen. Dabei stützen sich die Prozeßanschlußflansche 4, 5 unter Einschließen von ringförmigen Dichtungen 12, 13 sowohl an dem Meßzellengehäuse 3 als auch an der keramischen Meßzelle 2 ab. Zur Herstellung der lösbaren Schrauben-Muttern-Verbindung 10, 11 durchdringen die Bolzen der Schrauben 10 die Prozeßanschlußflansche 4, 5.

Das zylindrische Zwischenstück 31 stellt die räumliche Verbindung zwischen dem Meßzellengehäuse 3 und dem Elektronikgehäuse 8 her. Im Innern des Zwischenstückes 31 sind (nicht dargestellt) die elektrischen Leitungen angeordnet, über welche die Meßzelle 2 mit der im Innern des Elektronikgehäuses 8 befindlichen elektronischen Schaltung in elektrischer Verbindung steht.

Auf der, dem Zwischenstück 31 zugewandten Seite ist an dem Elektronikgehäuse 8 ein Sechskant 81 angeformt. Der Sechskant 81 dient der Einleitung eines Drehmomentes, mit dessen Hilfe das Elektronikgehäuse 8 über ein nicht dargestelltes Gewinde mit dem nichtdargestellten Gewinde des Zwischenstückes 31 des Meßzellengehäuses 3 verschraubt ist. Das Elektronikgehäuse 8 umschließt außer der elektrischen Schaltung auch elektrische Anschlußelemente, über welche der Druckmeßaufnehmer in elektrischer Verbindung mit einer Energieversorgungs- und/oder Informationsverarbeitungszentrale steht. Das Elektronikgehäuse 8 kann außerdem mit einem elektrischen Anzeigegerät ausgestattet sein, welches einen elektrischen Meßwert anzeigt, der dem von der Druckmeßzelle ermittelten Druck des Meßmediums entspricht. Die flanschförmige Fläche 14 mit den Gewindebohrungen 15 ist zur Befestigung des Meßwertaufnehmers 1 am Meßort bestimmt.

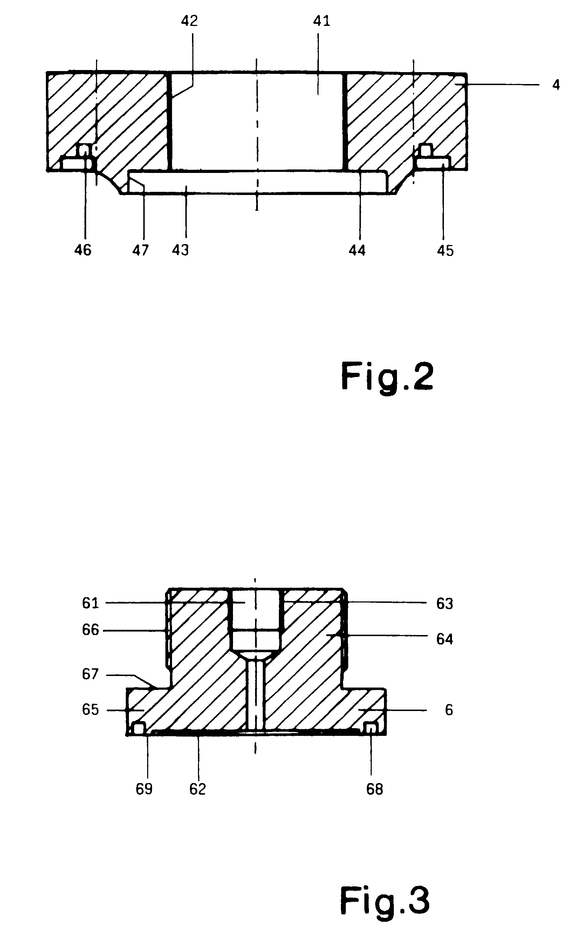

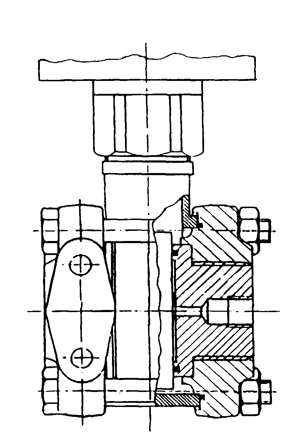

Zur Erfassung des Meßwertes ist es notwendig, daß die Druckmeßzelle 2 mit dem Meßraum, in dessen Inneren sich das Meßmedium befindet, und damit mit dem Meßmedium selbst in räumlicher Verbindung steht. Diese räumliche Verbindung ist über eine nichtdargestellte Verbindungsleitung hergestellt, welche an ihrem einen Ende an der, den Meßraum umschließenden Wandung und an dem anderen Ende an dem Prozeßanschlußflansch 4 angeschlossen ist. Zur räumlichen Verbindung der Verbindungsleitung mit der Meßzelle 2 durchdringt eine Bohrung 61 den Prozeßanschlußflansch 4. Die Bohrung 61 mündet in einem kurzen zylindrischen Hohlraum 62 (Fig. 3) welcher dazu dient, den Druck des Meßmediums gleichmäßig auf die Kreisfläche der Meßmembran 21 zu verteilen. Zum Anschluß der Verbindungsleitung an dem Prozeßanschlußflansch 4 ist in die Bohrung 61 ein Innengewinde 63 eingebracht.

Um nun den Druck eines aggressiven oder korrosiven Mediums messen zu können, ist es erforderlich, nur solche Werkstoffe mit dem Meßmedium in Verbindung zu bringen, welche widerstandsfähig gegenüber diesen Medien sind. Die keramische Meßzelle besitzt diese Eigenschaft. Bei Wahl eines geeigneten Werkstoffes ist dies ebenfalls für die Verbindungsleitung der Fall. Die metallischen Prozeßanschlußflansche sind jedoch sehr häufig bei extrem aggressiven und korrosiven Medien nicht einsetzbar. Es muß deshalb auf einen nichtmetallischen Werkstoff, z. B. auf einen polymeren Kunststoff zurückgegriffen werden. Solche Kunststoffe haben aber den Nachteil, daß ihre Formstabilität mit zunehmender Erwärmung stark abnimmt, sodaß eine Abdichtung zwischen der Meßzelle 2 und dem Innenraum des Meßzellengehäuses 3, sowie zwischen dem Meßzellengehäuse 3 und der Umwelt auch durch den Einschluß der ringförmigen Dichtungen 12 und 13 nicht mehr gewährleistet ist. Zur Behebung dieser Nachteile ist ein Prozeßanschlußzapfen 6 vorgesehen, welcher den Prozeßanschlußflansch 4 so durchdringt, daß außer der Meßmembran 21 nur der Prozeßanschlußzapfen 6 mit dem Meßmedium in Verbindung treten kann. Ohne jedoch auf die, durch einen metallischen Flansch gegebene temperaturbeständige Stabilität des Prozeßanschlußflansches 4 zu verzichten.

Wie aus Figur 2 ersichtlich ist, durchdringt eine Bohrung 41 den Prozeßanschlußflansch 4 koaxial zu seiner Symmetrieachse. Der Prozeßanschlußflansch 4 ist wie bisher aus einem formstabilen metallischen Werkstoff hergestellt. Die Mantelfläche der Bohrung 41 ist mit einem Innengewinde 42 versehen. Auf der, der Meßzelle 2 zugewandten Seite mündet die Bohrung 41 in einem zylindrischen Abschnitt 43 größeren Durchmessers. Dabei weist der Abschnitt 43 eine Mantelfläche 47 auf. Durch die unterschiedlichen Durchmesser von Bohrung 42 und zylindrischen Abschnitt 43 ist an dem Boden des zylindrischen Abschnittes 43 eine, sich radial erstreckende ringförmige Schulter 44 ausgebildet. Weiter ist an der, der Meßzelle 2 zugewandten Stirnseite des Prozeßanschlußflansches 4 eine Nut 45 von rechteckigem Querschnitt angeformt. Die Nut 45 umläuft koaxial die Bohrung 41 derart, daß ihre Symmetrieachse mit der Symmetrieachse der Bohrung 41 und damit des Prozeßanschlußflansches 4 zusammenfällt. Der Boden der Nut 45 ist durch eine weitere Nut 46 durchbrochen. Im zusammengebauten Zustand wird sich die Gehäusewand des Meßzellengehäuses 3 an dem Boden der Nut 45 abstützen und wird dabei gegen die in der Nut 46 angeordnete ringförmige Dichtung 12 gepresst.

Figur 3 zeigt einen Schnitt durch den, aus einem polymeren Kunststoff, vorteilhaft aus einem Polyvinylidenfluorid (PVDF) hergestellten Prozeßanschlußzapfen 6. Der Prozeßanschlußzapfen 6 setzt sich aus einem längeren Abschnitt kleineren Durchmessers 64 und einen kürzeren Abschnitt größeren Durchmessers 65 zusammen. Die Mantelfläche des Abschnittes 64 ist mit einem Außengewinde 66 versehen. Wie in der Bohrung 41 des Prozeßanschlußflansches 4 ist auch an dem Prozeßanschlußzapfen 6 durch die unterschiedlichen Durchmesser der Abschnitte 64 und 65 eine ringförmige Schulter 67 ausgebildet, welche sich radial erstreckt und den Abschnitt 64 rechtwinklig umläuft. An der, der Meßzelle 2 zugewandten Stirnfläche umläuft außerdem eine Nut 68 koaxial zur Symmetrieachse der Bohrung 61 und damit der des Prozeßanschlußzapfen 6 den zylindrischen Hohlraum 62. Im zusammgengebauten Zustand wird sich eine ringförmige Fläche außerhalb der Membran 21 der Druckmeßzelle 2 an der, nicht von dem Hohlraum 62 durchbrochenen, ringförmigen Dichtfläche 69, des Anschlußzapfens 6 abstützen und dabei gegen die, in der Nut 68 angeordnete ringförmige Dichtung 13 gepresst.

Um nun zu verhindern, daß das aggressive oder korrosive Medium mit dem metallischen Prozeßanschlußflansch 4 in Berührung kommen kann, ist der Prozeßanschlußzapfen 6 so mit seinem Außengewinde 66 in das Innengewinde 42 des Prozeßanschlußzapfens 4 eingeschraubt, daß der Abschnitt 64 die Bohrung 41 durchdringt und sich dabei die Schulter 67 an der Schulter 44 abstützt. Dabei durchdringt ein kurzes Stück des Abschnittes 65 des Prozeßanschlußzapfens 6 den zylindrischen Abschnitt 43 des Prozeßanschlußflansches 4. Somit nimmt die Schulter 44 alle axialen und die Mantelfläche 47 des Abschnittes 43 alle radialen Kräfte auf, welche durch ein temperaturbedingtes Verformen des polymeren Werkstoffes von dem Prozeßanschlußzapfen 6 ausgehen.

Durch den Anschluß der Verbindungsleitung an dem Prozeßanschlußzapfen 6, und damit räumliche Verbinden der Meßzelle 2 über die Bohrung 61, mit der Verbindungsleitung, die Abdichtung der Meßzelle 2 gegenüber dem Innenraum des Meßzellengehäuses 3 mittels der Dichtflächen 69, 21 und der Dichtung 13 ist nun gewährleistet, daß das Meßmedium, außer dem keramischen Werkstoff der Meßzelle 2 und dem polymeren Kunststoff des Prozeßanschlußzapfens 6, mit keinen anderen Werkstoffen in Verbindung treten kann. Dabei wird der Prozeßanschlußzapfen 6 so, von dem metallischen Prozeßanschlußflansch 4 gestützt und gehalten, daß auch bei höheren Temperaturen des Meßmediums oder des Prozesses die Dichtheit der Dichtflächen gewährleistet ist.

Selbstverständlich kann anstelle des Anschlusses der Verbindungsleitung an dem Prozeßanschlußzapfen 6 über das Gewinde 62 jede andere geeignete Anschlußform realisiert sein.

## Patentansprüche

1. a) Metallischer Prozeßanschlußflansch (4) für einen Druckmeßaufnehmer (2, 3) mit einer lösbaren Verbindung (10, 11) durch welche der metallische Prozeßanschlußflansch (4) formschlüssig mit dem Druckmeßaufnehmer (2, 3) verbunden ist und
b) mit meßmedienbeständigen nichtmetallischen als Prozeßanschlußzapfen (6) ausgebildeten Verbindungsmitteln aus Kunststoff, welche sich axial an einer Schulter (44) und radial an einer Mantelfläche (47) des Prozeßanschlußflansches (4) abstützen;
c) mit einem an dem Prozeßanschlußzapfen (6) angeformten von einer meßmedienbeständigen Membran (21) des Druckmeßaufnehmers verschlossenen zylindrischen Hohlraum (62),
d) über welche die Meßzelle (2) des Druckmeßaufnehmers mit den Meßmedien, deren Druck gemessen werden soll, in räumlicher Verbindung steht, wobei
e) der zylindrische Hohlraum (62) gegenüber dem Innenraum des Meßzellengehäuses (3) und das Meßzellengehäuse (3) gegenüber der Umwelt abgedichtet ist;
f) wobei sich der Prozeßanschlußflansch (4) mit dem Boden einer Nut (45) unter Einschluß einer ringförmigen Dichtung (12) an einer Ringfläche des Meßzellengehäuses (3) und gleichzeitig der Prozeßanschlußzapfen (6) mit einer Dichtfläche (69) unter Einschluß einer weiteren ringförmigen Dichtung (13) an einer ringförmigen Dichtfläche der Membran (21) der Meßzelle (2) dichtend abstützt.

2. Prozeßanschlußflansch nach Anspruch 1 wobei aus dem Innengewinde (42) des Prozeßanschlußflansches (4) und dem Außengewinde (66) des Prozeßanschlußzapfens (6) eine Schraubverbindung gebildet ist, durch welche der Prozeßanschlußzapfen (6) in dem Prozeßanschlußflansch (4) eingesetzt und gehalten ist.

3. Prozeßanschlußflansch nach Anspruch 1, wobei der Prozeßanschlußzapfen (6) aus einem Polyvinilidenfluorid (PVDF) hergestellt ist.

## Claims

1. a) A metallic process connection flange (4) for a pressure sensor (2, 3) with a separable connection (10, 11) by which the metallic process connection flange (4) is positively connected with the pressure sensor (2, 3), and
b) with nonmetallic connecting means of plastic in the form of a male process connection (6) which are resistant to the media to be measured and are supported axially on a shoulder (44) and radially on a circumferential surface (47) of the process connection flange (4);
c) with a cylindrical hollow space (62) formed on the male process connection (6) and closed with a measured-media-resistant diaphragm (21) of the pressure sensor,
d) via which diaphragm (21) the measuring cell (2) of the pressure sensor is physically connected with the media whose pressure is to be measured,
e) the cylindrical hollow space (62) being sealed from the interior space of the measuring-cell housing (3), and the measuring-cell housing (3) being sealed from the environment;
f) the process connection flange (4) resting with the bottom of a groove (45) against an annular surface of the measuring-cell housing (3), with a sealing ring interposed therebetween, and the male process connection (6) resting with a sealing surface (69) against an annular sealing surface of the diaphragm (21) of the measuring cell (2), with a further sealing ring (13) interposed therebetween.

2. A process connection flange as claimed in claim 1 wherein the internal thread (42) of the process connection flange (4) and the external thread (66) of the male process connection (6) form a screw joint by which the male process connection (6) is fitted and held in the process connection flange (4).

3. A process connection flange as claimed in claim 1 wherein the male process connection (6) is made of polyvinylidene fluoride (PVDF).

## Revendications

1. a) Bride métallique (4) de raccordement à un circuit opérationnel pour un capteur mesurant la pression (2, 3) avec présence d'une liaison amovible (10, 11) par laquelle a bride métallique (4) est relié par engagement mécanique au capteur mesurant la pression (2, 3) ; et
b) avec présence de moyens de liaison en matière plastique, résistant aux milieux à contrôler et non métalliques, réalisés sous forme de tenons (6) de raccordement à un circuit opérationnel, qui viennent s'appuyer axialement à un épaulement (44) et radialement à une surface enveloppante (47) de la bride (4) ;
c) comportant une cavité cylindrique (62) moulée sur le tampon (6) et fermée par une membrane (21) résistante aux milieux à contrôler du capteur mesurant la pression (21);
d) par laquelle la cellule sensible (2) du capteur mesurant la pression est en liaison spatiale avec les milieux dont on souhaite mesurer la pression, tandis que
e) la cavité cylindrique (62) est étanche par rapport à l'espace intérieur du carter (3) contenant la cellule sensible, et ce carter (3) est étanche par rapport à l'atmosphère extérieure ;
f) tandis que la bride (4) s'appuie de manière étanche, par le fond d'une rainure (45) avec inclusion d'un joint (12) en forme de bague, sur une face annulaire du carter (3) de la cellule sensible, et qu'en même temps, le tenon de raccordement (6) s'appuie de manière étanche par une face d'étanchéité (69) avec inclusion d'un autre joint (13) en forme de bague sur une face d'étanchéité de forme annulaire de la membrane (21) de la cellule sensible (2).

2. Bride de raccordement à un circuit opérationnel conforme à la revendication 1, avec présence d'un raccord par vis constitué du filetage intérieur (42) de la bride (4) et du filetage extérieur (66) du tampon (6), raccord par lequel ledit tenon (6) est inséré et maintenu à l'intérieur de la bride (4).

3. Bourrelet de raccordement à un circuit opérationnel selon la revendication 1, le tenon (6) de raccordement au circuit opérationnel étant fabriqué en un fluorure de polyvinylidène (PVDF).
